# EUROPÄISCHE PATENTSCHRIFT

(11) **EP 1 290 087 B1**
(45) Veröffentlichungstag und Bekanntmachung des Hinweises auf die Patenterteilung: **28.12.2005**
(21) Anmeldenummer: 01955101.9
(22) Anmeldetag: 22.02.2001
(51) Int. Cl.: C08L 59/00, C08K 3/04, H01B 1/24

(54) **GLEITMODIFIZIERTES, ELEKTRISCH LEITFÄHIGES POLYOXYMETHYLEN**
SLIP-MODIFIED, ELECTRICALLY CONDUCTIVE POLYOXYMETHYLENE
POLYOXYMETHYLENE ELECTRIQUEMENT CONDUCTIBLE, A MODULE DE GLISSEMENT MODIFIE

(30) Priorität: 28.02.2000 DE 10009282
(43) Veröffentlichungstag der Anmeldung: 12.03.2003
(73) Patentinhaber: Ticona GmbH, 65451 Kelsterbach (DE)
(72) Erfinder: SCHLEITH, Oskar, 65719 Hofheim (DE); KURZ, Klaus, 65451 Kelsterbach (DE)
(86) Internationale Anmeldenummer: PCT/EP2001/002013
(87) Internationale Veröffentlichungsnummer: WO 2001/064788

(56) Entgegenhaltungen:
- EP-A- 0 905 190
- US-A- 4 828 755

## Beschreibung

Die Erfindung betrifft eine elektrisch leitfähige Polyoxymethylen-Formmasse mit durch Zugabe von einem Gleitmittelgemisch bestehend aus einem Gleitmittel mit überwiegend äußerer Gleitwirkung und einem Gleitmittel mit überwiegend innerer Gleitwirkung zur Verbesserung des Abriebverhaltens, Aufrechterhaltung der elektrischen Leitfähigkeit und seine Verwendung.

In zunehmendem Maße werden traditionelle Werkstoffe wie Metalle erfolgreich durch Kunststoffe abgelöst. Aufgrund der üblicherweise sehr hohen elektrischen Widerstände in den Kunststoffen besteht die Gefahr einer elektrostatischen Aufladung, die für bestimmte Anwendungsbereiche störend wirken oder sogar eine Gefahrenquelle darstellen können. Daher versucht man die elektrische Leitfähigkeit von Kunststoffen zu verbessern. Zur Herabsetzung des inneren elektrischen Widerstandes eignet sich der Zusatz von Metallpulvern und -fasern, Carbonfasem, Graphit oder Ruß. Besonders letztgenannter ist für die leitfähige Ausrüstung von Polymeren universell einsetz- und verarbeitbar. Im Vergleich zu Graphit werden durch hochstrukturierte Ruße deutlich niedrigere Einsatzmengen benötigt. Nachteilig bei der Verwendung von hochstrukturierten Rußen ist ihre Empfindlichkeit gegen Verarbeitungseinflüsse. Der Ruß muß einerseits ausreichend gut dispergiert sein, andererseits dürfen die Rußagglomerate nicht durch zu hohe Scherung aufgelöst werden. Zu diesem Zweck verwendet man häufig Gleitzusätze, die zu einer niedrigen Scherung in der Schmelze beitragen sollen.
Viele der aus elektrisch leitfähigem Polyoxymethylen hergestellten Formteilen unterliegen auch tribologischen Beanspruchungen. Es ist allgemein bekannt, daß durch Gleitmittelzusätze die tribologischen, d.h. die Gleit- und Reib-Eigenschaften von Thermoplasten verbessert werden können. Das Problem ist jedoch, die richtige Auswahl und Kombination an Gleitmitteln für den jeweiligen Kunststoff zu finden. Die im POM verwendeten Verarbeitungshilfen sind nicht geeignet an verschleißbeanspruchten Formteilen den Abrieb zu reduzieren. Den Abrieb zu verringern haben in Verbindung mit in POM eingearbeitetem Leitfähigkeitsruß nur wenige Gleitmittel. Vermutet wird, daß sie die Bindung zwischen Matrix und Ruß stören. Dies dürfte auch der Grund für die Reduzierung der mechanischen Eigenschaften sein. Daher ist eine vorsichtige Verwendung und eine optimale Auswahl der Gleitmittel erforderlich.

Ein weiteres Problem mit den Leitfähigkeitsrußen stellt der Zähigkeitabfall dar. Er kann durch Zugabe von Elastomeren kompensiert werden.

Im US Patent 152307 wird eine Mischung beschrieben, die zur Einarbeitung von Leitfähigkeitsruß in Polyoxymethylen, Polyethylenglycol und unpolares Polyethylenwachs vorschlägt. Es wird, wie die niedrigen elektrischen Widerstandswerte zeigen, durch die Gleitmittel eine schonende Einarbeitung des Rußes in die Matrix erreicht, der Abrieb aus den daraus hergestellten Formteilen ist jedoch hoch und die mechanischen Eigenschaften sowie die Wärmeformbeständigkeit nehmen im Vergleich zum Basismaterial stark ab

Die Aufgabe der vorliegenden Erfindung lag in der Verbesserung des Abriebsverhaltens und in der Reduzierung des Abfalls der mechanischen Eigenschaften unter Beibehaltung der guten elektrischen Leitfähigkeit eines mit Leitfähigkeitsruß modifizierten Polyoxymethylens

Die Aufgabe der Erfindung konnte gelöst werden durch die Verwendung eines Gleitmittelgemisches bestehend aus einem Gleitmittel mit überwiegend äußerer Gleitwirkung, darunter versteht man grenzflächenaktive Gleitmittel, und Gleitmittel mit überwiegend innerer Gleitwirkung, worunter man viskositätserniedrigende Gleitmittel, d.h., Gleitmittel mit überwiegend in der Schmelze wirkendem Schmiereffekt versteht.

Gegenstand der Erfindung ist eine Formmasse bestehend aus 30 bis 89 Gewichtsteilen eines Polyoxymethylens (A) und 2 bis 10 Gewichtsteilen, bevorzugt 3 bis 5 Gewichtsteilen eines Leitfähigkeitsrußes (B), sowie 0,5 bis 6 Gewichtsteilen, bevorzugt 3 bis 5 Gewichtsteilen einem Gleitmittelgemisch (C) bestehend aus einem Gleitmittel mit überwiegend innerer Gleitwirkung und einem Gleitmittel mit überwiegend äußerer Gleitwirkung, und 1 bis 12 Gewichtsteilen, bevorzugt 5 bis 10 Gewichtsteilen einer Schlagzähkomponente (D). Die Formmasse kann Zusatzstoffe und Verarbeitungshilfen (E) in Mengen von 0,005 bis 50 Gewichtsteilen enthalten. Die Komponenten (A) bis (E) ergänzen sich dabei stets zu 100 Gewichtsteilen.

Als Komponente (A) eignet sich wie eingangs genannt Polyxoymethylen.
Bei den Polyoxymethylenen (POM), wie sie beispielsweise in der DE-A 29 47 490 beschrieben sind, handelt es sich im allgemeinen um unverzweigte lineare Polymere, die in der Regel mindestens 80 %, vorzugsweise mindestens 90 %, Oxymethyleneinheiten (-CH₂O-) enthalten. Der Begriff Polyoxymethylene umfaßt dabei sowohl Homopolymere des Formaldehyds oder seiner cyclischen Oligomeren wie Trioxan oder Tetroxan als auch entsprechende Copolymere.

Homopolymere des Formaldehyds oder Trioxans sind solche Polymere, deren Hydroxylendgruppen in bekannter Weise chemisch gegen Abbau stabilisiert sind, z.B. durch Veresterung oder Veretherung. Copolymere sind Polymere aus Formaldehyd oder seinen cyclischen Oligomeren, insbesondere Trioxan, und cyclischen Ethern, cyclischen Acetalen und/oder linearen Polyacetalen.
Derartige POM-Homo- oder Copolymerisate sind dem Fachmann an sich bekannt und in der Literatur beschrieben. Ganz allgemein weisen diese Polymere mindestens 50 mol-% an wiederkehrenden Einheiten -CH₂O- in der Polymerhauptkette auf. Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung werden POM-Copolymere als Komponente (A) bevorzugt, insbesondere solche, die neben den wiederkehrenden Einheiten -CH₂O- noch bis zu 50, vorzugsweise von 0,1 bis 20 und insbesondere 0,5 bis 10 mol-% an wiederkehrenden Einheiten 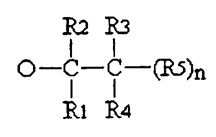 enthalten, wobei R¹ bis R⁴ unabhängig voneinander ein Wasserstoffatom, eine C₁- bis C₄-Alkylgruppe oder eine halogensubstituierte Alkylgruppe mit 1 bis 4 C-Atomen und R⁵ eine -CH₂-, -CH₂O-, eine C₁- bis C₄-Alkyl- oder C₁- bis C₄-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel 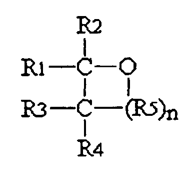 wobei R¹ bis R⁵ und n die obengenannte Bedeutung haben. Als Beispiele seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether sowie lineare Oligo- oder Polyformale wie Polydioxolan oder Polydioxepan als Comonomere genannt.

Besonders vorteilhaft sind Copolymere aus 99,5 - 95 Mol-% Trioxan und 0,5 bis 5 mol-% einer der vorgenannten Comonomere.

Als Komponente (A) ebenfalls geeignet sind Oxymethylenterpolymerisate, die beispielsweise durch Umsetzung von Trioxan, einem der vor stehend beschriebenen cyclischen Ether und mit einem dritten Monomeren, vorzugsweise einer bifunktionellen Verbindung der Formel 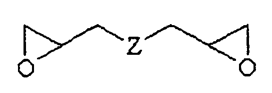 wobei Z eine chemische Bindung, -O- oder -ORO- (R=C₁- bis C₈-Alkylen oder C₂- bis C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 :1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Verfahren zur Herstellung der vorstehend beschriebenen POM-Homo- und Copolymerisate sind dem Fachmann bekannt und in der Literatur beschrieben.

Die bevorzugten POM-Copolymere haben Schmelzpunkte von mindestens 150 °C und Molekulargewichte (Gewichtsmittelwert) M_{w} im Bereich von 5 000 bis 200 000, vorzugsweise von 7 000 bis 150 000. Endgruppenstabilisierte POM-Polymerisate, die an den Kettenenden C-C-Bindungen aufweisen, werden besonders bevorzugt.
Die eingesetzten POM-Polymere haben im allgemeinen einen Schmelzindex (MVR-Wert 190/2,16) von 2 bis 50 cm³/10 min (ISO 1133).

Leitfähigkeitsruße (B) sind Ruße mit sehr hoher Struktur. Struktur, Oberfläche und Teilchengröße dieser Ruße stehen miteinander in Beziehung. Mit abnehmender Teilchengröße vergrößern sich Oberfläche und Struktur. Mit einer hohen Struktur läßt sich eine bessere elektrische Leitfähigkeit erzielen. Als Maß für die Struktur dient die Dibutylphthalat-Absorption. Hochwirksame Leitfähigkeitsruße besitzen eine Dibutylphthalat-Absorption von über 450 cm³/100 g.

Das Gleitmittelgemisch (C) besteht aus einem Gleitmittel mit überwiegend äußerer Gleitwirkung und aus einem Gleitmittel mit überwiegend innerer Gleitwirkung. Als Gleitmittel mit überwiegend äußerer Gleitwirkung können feste und/oder flüssige Paraffine, Montansäureester, teilverseifte Montansäureester, Stearinsäuren, polare und/oder unpolare Polyethylenwachse, Poly-α-Olefin-Oligomere, Silikonöle, Polyalkylenglykole und Perfluoralkylether eingesetzt werden. Seifen und Ester, auch teilverseifte, sind sowohl Gleitmittel mit äußerer als auch innerer Gleitwirkung. Bevorzugt wird ein hochmolekulares, oxidiertes und damit polares Polyethylenwachs eingesetzt. Es verbessert das tribologische Verhalten und läßt die mechanischen Eigenschaften weniger stark abfallen. Als Gleitmittel mit überwiegend innerer Gleitwirkung wird bevorzugt Stearylstearat eingesetzt, das die schonende Einarbeitung des Rußes gewährleistet.
Mit dem überwiegend grenzflächenaktiven oxidierten Polyethylenwachs kann bei alleiniger Verwendung in der Polyoxymethylen/Leitfähigkeitsruß-Mischung eine höhere Festigkeit, besonders in der Fließnaht und ein besseres Verschleißverhalten im Vergleich zu einem Gleitmittel mit überwiegend innerer Gleitwirkung erreicht werden. Um die Leitfähigkeit des Rußes aufrecht zu erhalten ist jedoch der Zusatz eines inneren Gleitmittels notwendig.

Die Besonderheiten des oxidierten Polyethylenwachses sind die mit Sauerstoff oberflächengebundenen, funktionellen Gruppen. Sie werden gezielt durch oxidative Nachbehandlung erzeugt. Durch die oxidative Nachbehandlung des Polyethylenwachses wird die Affinität zum POM verbessert. Im Vergleich zu anderen Polyethylenwachsen fällt die Dehnung in der Fließnaht weniger stark ab und der Abrieb beim Gleitvorgang wird geringer. Dies ist in Patentanmeldung EP 0 905 190 A1 beschrieben. Paraffine fest und flüssig, Stearinsäuren, Polyethylenwachse unpolar und polar, Poly-α-Olefin Oligomere, Silikonöle, Polyakylenglykole und Perfluoralkylether sind Gleitmittel mit überwiegend äußerer Gleitwirkung. Seifen und Ester, auch teilverseifte, sind Gleitmittel mit sowohl äußerer als auch innerer Gleitwirkung. Montansäureester und Montansäureester teilverseift sind Gleitmittel mit überwiegend äußerer. Gleitwirkung.
Das bevorzugte oxidierte Polyethylenwachs in der Komponente (C) ist ein hochmolekulares, polares Wachs und besitzt im allgemeinen eine Säurezahl von 12 bis 20 mg KOH/g und eine Viskosität von 3000 bis 5000 mPa*s bei 140°C.

Als Gleitmittel mit überwiegend innerer Gleitwirkung in der Komponente (C) sind zu nennen: Fettalkohole, Dicarbonsäure-Ester, Fettsäure-Ester, Fettsäure, fettsaure Seifen, Fettamid, Wachsester und Stearylstearate wobei letztgenanntem der Vorzug gegeben wird. Gleitmittel werden beschrieben in Gächter/Müller, "Taschenbuch der Kunststoff-Additive", 3. Ausgabe, Carl Hanser Verlag München/Wien 1994, Seite 478-504 worauf Bezug genommen wird.

Als Schlagzähkomponente (D) werden thermoplastisch verarbeitbare Elastomere bevorzugt, TPE-U (Thermoplastische Polyurethan- Elastomere) eingesetzt. Bei diesen Materialien handelt es sich um Multiblockcopolymere, die aus steifen Urethansegmenten und flexiblen langkettigen Diolsegmenten aufgebaut sind.

Die steifen Urethansegmente werden dabei erhalten aus einer Reaktion zwischen Diisocyanaten und den sogenannten Kettenverlängerern. Als Diisocyanat können aromatische, alicyclische oder aliphatische Diisocyanate zum Einsatz kommen. Bevorzugt werden dabei Diphenylmethan-4,4'-diisocyanat (MDI), Tolylen-diisocyanat (TDI), m-Xylylen-diisocyanat, p-Xylylen-diisocyanat, Naphthylendiisocyanat, Diphenyldiisocyanat, 4,4'Methylene-bis-cyclohexylisocyanat, Isophorondiisocyanat und 1,6-Hexamethylendiisocyanat. Als Kettenverlängerer werden kurzkettige aliphatische, alicyclische oder aromatische Diole oder Diamine mit einer Molmasse unter 500 g/mol, vorzugsweise unter 300 g/mol eingesetzt. Als Kettenverlängerer bevorzugt eingesetzt werden z.B. Ethylenglykol, 1,3-Propylenglykol, 1,2-Propylenglykol, 1,4-Butandiol, 1,5-Pentandiol, 1,6-Hexandiol, 1,4-Cyclohexandiol, Ethylendiamin, Hexamethylendiamin, Xylylendiamin oder 4,4'-diaminodiphenylmethan.

Die flexiblen langkettigen Diolsegmente können ausgewählt werden aus Polyetherdiolen, Polyesterdiolen, Polyetheresterdiolen und Polycarbonatdiolen mit einer zahlenmäßig mittleren Molmasse zwischen 500 und 5000 g/mol, vorzugsweise zwischen 1000 und 3000 g/mol. Die Polyetherdiole können durch ringöffnende Polymerisation von cyclischen C2 bis C12 - Ethern, wie z.B. Ethylenoxid, Propylenoxid oder Tetrahydrofuran, erhalten werden. Die Polyesterdiole können durch Veresterungsreaktionen von Dialkoholen (bevorzugt werden dabei z.B. Ethylenglykol, 1,3-Propylenglykol, 1,2-Propylenglykol, 1,4-Butandiol, 1,3-Butandiol, 2-Methylpropandiol, 1,5-Pentandiol, 3-Methyl-1,5-Pentandiol, 1,6-Hexandiol, Neopentylglykol, Nonandiol, 1,10-Decandiol) und Dicarbonsäuren (bevorzugt werden dabei z.B. Glutarsäure, Adipinsäure, Pimelinsäure, Korksäure, Sebacinsäure, Terephthalsäure oder Isophthalsäure) oder durch entsprechende Umesterungsreaktionen erhalten werden. Ebenso ist es möglich, solche Polyesterdiole durch ringöffnende Polymerisation von Lactonen (bevorzugt werden dabei z.B. Caprolacton, Propiolacton und Valerolacton) zu erhalten. Die Polycarbonate können durch die Reaktion von Dialkoholen (bevorzugt werden dabei z.B. Ethylenglykol, 1,3-Propylenglykol, 1,2-Propylenglykol, 1,4-Butandiol, 1,3-Butandiol, 2-Methylpropandiol, 1,5-Pentandiol, 3-Methyl-1,5-Pentandiol, 1,6-Hexandiol, Neopentylglykol, Nonandiol, 1,10-Decandiol) mit Diphenylcarbonat oder Phosgen erhalten werden.

Für die beschriebene Formmasse werden bevorzugt Polyesterurethane verwendet. Die Produkte liegen im Härte-Bereich zwischen etwa Shore A 65 und etwa Shore D 75. Die Härte ist dabei auch ein Maß für den Anteil der steifen Urethansegmente zu den flexiblen langkettigen Diolsegmenten. Der Schmelzindex der Produkte wird abhängig vom Aufschmelzverhalten der steifen Urethansegmente bei verschiedenen Temperaturen gemessen. Er ist auch ein Maß für den Additionsgrad (Molmasse der Gesamtketten).
Als Zusatzstoffe und Verarbeitungshilfen (E) können Zusätze verwandt werden wie Formaldehydfänger, Säurefänger, Antioxidantien, UV-Stabilisatoren, Haftvermittler, Nukleierungsmittel und Entformungshilfen, deren Anteil an der Komponente (E) 0,005 bis 5 Gewichtsteile beträgt. Als zusätzliche Stoffe zur Verbesserung der elektrischen Leitfähigkeit dienen Stoffe wie Antistatika, Graphit, Carbonfasern sowie deren Mischungen. Die Gewichtsanteile dieser Stoffe betragen an der Komponente (E) 0,5 bis 20 Gewichtsteile. Weiter können zusätzliche Gleitstoffe eingesetzt werden wie ultrahochmolekulares Polyethylen (PE-UHMW), Aramidfaser, Kreide, Wollastonit, Polytetrafluorethylen (PTFE) und Pfropf-Copolymer, welches ein Produkt einer Pfropfreaktion aus einem Olefin-Polymer und einem Acrylnitril/Styrol-Copolymer ist, oder Mischungen davon mit Gewichtsanteilen an der Komponente (E) von 0,5 bis 25 Gewichtsteilen.

Die erfindungsgemäße Formmasse eignet sich für Funktionsteile bei denen die statische Aufladung unerwünscht ist oder eine Gefahr darstellt. Sie eignet sich besonders für solche Anwendungen die zusätzlich eine geringe Reibung und einen geringen Verschleiß fordern. Die aus der Formmasse hergestellten Teile können extrudierte Folien und Platten sowie spritzgegossene Formteile sein. Als Beispiele können genannt werden: Funktionsteile wie Niveausonden für Heizöltanks, Membrangitter in berührungslosen Füllstandmeßsystemen, Abstreifer an Geräten mit Papierfördervorgängen, Gleitrollen für Transportanlagen sowie Kettenglieder, Gleitschienen oder Zahnräder.

### Beispiele

Für das erfindungsgemäße Beispiel 2 und das Vergleichsbeispiel 1 wurde ein Copolymerisat aus Trioxan und Dioxolan mit einem Volumenschmelzindex MVR 190/2,16 von 8 cm³/10min verwendet. Das Copolymerisat wurde mit den in Tabelle1 aufgeführten Additiven versetzt.

**Tabelle 1.**

| **Beispiel 1** | | **Beispiel 2** | |
|---|---|---|---|
| Vergleichsrezeptur | Gewichtsteile | Rezeptur gemäß Erfindung | Gewichtsteile |
| POM-Copolymer | 81,2 | POM-Copolymer | 85 |
| Leitfähigkeitsruß | 4 | Leitfähigkeitsruß | 4 |
| Polyesterurethan | 10 | Polyesterurethan | 7 |
| Polyethylenglykol | 3 | Stearylstearat | 2 |
| PE-Wachs unpolar | 1,8 | PE-Wachs polar | 2 |

Das POM-Copolymerisat mit den jeweiligen Additiven wurde in einem schnellaufenden Fluidmischer, Diosna V 100 (Firma Dierks u. Söhne, Osnabrück, Bundesrepublik Deutschland) gemischt und in einem Doppelschneckenextruder ZE 25 x 33 D (Firma Berstorff, Hannover, Bundesrepublik Deutschland) bei einer Massetemperatur von 200 °C aufgeschmolzen und anschließend granuliert.
Das Granulat wurde acht Stunden bei 120 °C getrocknet und anschließend zu Probekörpern für mechanische und tribologische Prüfungen gespritzt. Als Spritzgießmaschine diente der Typ KM 90/210 B (Firma Krauss Maffei, München, Bundesrepublik Deutschland). Die Verarbeitungsbedingungen wurden nach den Empfehlungen der ISO 9988-2, Stoff-Norm für POM, gewählt.

### Messungen:

Rheologische Eigenschaften
   MVR 190/2,16 nach ISO 1133
Mechanische Eigenschaften
   Zugversuch nach ISO 527 Teil 1 und 2
Thermische Eigenschaften
   Wärmeformbeständigkeit HDT/A (1,8 N/mm²) nach ISO 75 Teil 1 und 2
Elektrische Eigenschaften
   Spezifischer Durchgangswiderstand nach IEC 93
   Spezifischer Oberflächenwiderstand nach IEC 93
Verschleißmessungen
Der Abrieb wurde auf einer Verschleißwelle - eine rotierende Welle, auf die zylindrische Probekörper mit 12 mm Durchmesser aus dem zu prüfenden Werkstoff gepreßt werden - gemessen. Das Verschleißvolumen wird in Abhängigkeit von der Zeit bestimmt. Das Testprinzip entspricht nach ISO/DIS 7148-2 dem "pin on ring" Prinzip.
Prüfbedingungen:

| | |
|---|---|
| Werkstoff Welle | Stahl |
| Wellendurchmesser | 65 mm |
| Rauhtiefe Rz | ca. 0,8 µm |
| Belastung | 3,1 N |
| Gleitgeschwindigkeit | 136 m/min |
| Versuchsdauer | 60 h |

Die Meßergebnisse sind in Tabelle 2 aufgeführt.

**Tabelle 2**

| **Ergebnisse** | **Beispiel 1** | **Beispiel 2** |
|---|---|---|
| | Vergleichsrezeptur | Rezeptur gemäß Erfindung |
| Streckspannung | 34 MPa | 50 MPa |
| Wärmeformbeständigkeit | 67 °C | 78 °C |
| Spez .Durchgangswiderstand | 1100 Ohm cm | 1030 Ohm cm |
| Spez. Oberflächenwiderstand | 500 Ohm | 580 Ohm |
| Verschleißvolumen | 25 mm³ | 9 mm³ |

Die Beispiele zeigen, daß in Beispiel 2, der Rezeptur mit oxidiertem Polyethylenwachs in Kombination mit dem Stearylstearat, eine deutlich höhere Streckspannung und eine höhere Wärmeformbeständigkeit bei gleichbleibenden elektrischen Eigenschaften im Vergleich zu Beispiel 1 gemessen werden. Ebenso ist der Abrieb bei dem Beispiel 2 deutlich geringer als bei Beispiel 1.
Die Rezeptur gemäß Beispiel 2 ist ein Kompromiß zwischen einem Gleitmittel mit überwiegend äußerer Gleitwirkung und einem Gleitmittel mit überwiegend innerer Gleitwirkung.
Die Wirkung der einzelnen Gleitmittel allein ist in den Beispielen 3 und 4 (Tabelle 3) untersucht worden. Aus den Ergebnissen in der Tabelle 4 ist zu entnehmen, daß die Fließfähigkeit der Schmelze bei Beispiel 4 verbessert und dadurch eine schonendere Einarbeitung des Leitfähigkeitsrußes gewährleistet ist. Die elektrischen Eigenschaften im Beispiel 4 sind dadurch im Vergleich zu Beispiel 3 besser. Beispiel 3 mit einem Gleitmittel mit überwiegend äußerer Gleitwirkung hat dafür die bessere Fließnahtfestigkeit und das geringere Verschleißvolumen.

**Tabelle 3**

| **Beispiel 3** | | **Beispiel 4** | |
|---|---|---|---|
| | Gewichtsteile | | Gewichtsteile |
| POM-Copolymer | 86 | POM-Copolymer | 86 |
| Leitfähigkeitsruß | 4 | Leitfähigkeitsruß | 4 |
| Polyesterurethan | 7 | Polyesterurethan | 7 |
| PE-Wachs polar | 3 | Stearylstearat | 3 |

**Tabelle 4**

| **Ergebnisse** | **Beispiel 3** | **Beispiel 4** |
|---|---|---|
| MVR 190/2,16 | 0,34 cm³/10min | 1,15 cm³/10min |
| Streckspannung mit Bindenaht | 55 Mpa | 47 MPa |
| Spez .Durchgangswiderstand | 8300 Ohm cm | 4200 Ohm cm |
| Spez. Oberflächenwiderstand | 760 Ohm | 230 Ohm |
| Verschleißvolumen | 10,9 mm³ | 20,6 mm³ |

## Patentansprüche

1. Thermoplastische Formmasse bestehend aus
Komponente (A) 14 bis 97,5 Gew.Teilen eines Polyoxymethylenhomo- oder Copolymerisats,
Komponente (B) 1 bis 10 Gew.-Teilen eines Leitfähigkeitsrußes,
Komponente (C) 0,5 bis 6 Gew.-Teilen eines Gleitmittelgemisches bestehend aus einem Gleitmittel mit überwiegend innerer Gleitwirkung und einem Gleitmittel mit überwiegend äußerer Gleitwirkung,
Komponente (D) 1 bis 25 Gew.-Teilen einer Schlagzähkomponente, und
Komponente (E) 0 bis 50 Gew.-Teilen weiterer Zusatzstoffe und
Verarbeitungshilfsmittel, Füll -, Verstärkungs- und / oder polymerer Gleitstoffe, wobei die Summe der Komponenten (A) bis (E) stets 100 Gew.-Teile ist.

2. Formmasse nach Anspruch 1, **dadurch gekennzeichnet, daß** sie aus 60 bis 89 Gew.-Teilen der Komponente (A), 3 bis 5 Gew.-Teilen der Komponente (B), 3 bis 5 Gew.-Teilen der Komponente (C), und 5 bis 10 Gew.-Teilen der Komponente (D) besteht.

3. Formmasse nach einem oder mehreren der Ansprüche 1 bis 2, **dadurch gekennzeichnet, daß** das Gleitmittel mit überwiegend äußerer Gleitwirkung aus der Komponente (C) ausgewählt ist aus einem oder mehreren der Gleitmittel festes Paraffin, flüssiges Paraffin, Montansäureester, teilverseifte Montansäureester, Stearinsäuren, polare Polyethylenwachse, unpolare Polyethylenwachse, Poly-α-Olefin-Oligomere, Silikonöle, Polyalkylenglykole, Perfluoralkylether.

4. Formmasse nach einem oder mehreren der Ansprüche 1 bis 3, **dadurch gekennzeichnet, daß** das Gleitmittel mit überwiegend äußerer Gleitwirkung aus dem Gemisch der Komponente (C) ein hochmolekulares, polares Polyethylenwachs ist und eine Säurezahl von 12 bis 20 mg KOH/g und eine Viskosität von 3000 bis 5000 mPa.s bei einer Temperatur von 140° C besitzt.

5. Formmasse nach einem oder mehreren der Ansprüche 1 bis 4, **dadurch gekennzeichnet, daß** das Gleitmittel mit überwiegend innerer Gleitwirkung aus dem Gemisch der Komponente (C) ausgewählt ist aus einem oder mehreren der Gleitmittel Fettalkohole, Dicarbonsäure-Ester, Fettsäure-Ester, Fettsäure, Fettsäure-Seifen, Fettamid, Wachsester und Stearylstearate.

6. Formmasse nach einem oder mehreren der Ansprüche 1 bis 5, **dadurch gekennzeichnet, daß** das Gleitmittel mit überwiegend innerer Gleitwirkung aus dem Gemisch der Komponente (C) ein Stearylstearat ist.

7. Formmasse nach einem oder mehreren der Ansprüche 1 bis 6, **dadurch gekennzeichnet, daß** die Schlagzähkomponente (D) ein thermoplastisches Polyurethan-Elastomer ist.

8. Formmasse nach einem oder mehreren der Ansprüche 1 bis 6, **dadurch gekennzeichnet, daß** die Schlagzähkomponente (D) ein Polyesterurethan ist.

9. Formmasse nach einem oder mehreren der Ansprüche 1 bis 8, **dadurch gekennzeichnet, daß** die Komponente (E) ausgewählt ist aus einem oder mehreren der Füllstoffe Kreide, Talk, Wollastonit, Glimmer, Zinkoxid, Siliciumdioxid, der Verstärkungsstoffe Glasfasern, Kohlefasern und/oder organischen Hochmodulfasern und/oder der polymeren Gleitstoffe Polytetrafluorethylen in Pulver- und/oder Faserform, UHMW-Polyethylen, Pfropf-Polymerisate erhalten aus der Pfropfreaktion von Polyethylen, Acrylnitril/Styrol-Copolymerisat (SAN).

10. Verwendung einer thermoplastischen Formmasse nach einem oder mehreren der Ansprüche 1 bis 9 zur Herstellung von Formkörpern und Folien.

11. Verwendung einer thermoplastischen Formmasse nach einem oder mehreren der Ansprüche 1 bis 9 in Form von Funktionsteilen mit Anforderungen an eine gute elektrische Leitfähigkeit und ein gutes Verschleißverhalten.

12. Formkörper hergestellt aus einer thermoplastischen Formmasse nach einem oder mehreren der Ansprüche 1 bis 9.

## Claims

1. A thermoplastic molding composition composed of
component (A) from 14 to 97.5 parts by weight of a polyoxymethylenehomo- or copolymer,
component (B) from 1 to 10 parts by weight of a conductivity black,
component (C) from 0.5 to 6 parts by weight of a lubricant mixture composed of a lubricant with predominantly internal lubricant action and of a lubricant with predominantly external lubricant action,
component (D) from 1 to 25 parts by weight of an impact-modifier component, and
component (E) from 0 to 50 parts by weight of other additives and processing aids, fillers, reinforcing materials, and/or polymeric lubricants,
the entirety of components (A) to (E) always being 100 parts by weight.

2. The molding composition as claimed in claim 1, which is composed of from 60 to 89 parts by weight of component (A), from 3 to 5 parts by weight of component (B), from 3 to 5 parts by weight of component (C), from 5 to 10 parts by weight of component (D).

3. The molding composition as claimed in one or more of claims 1 to 2, wherein the lubricant with predominantly external lubricant action from component (C) is one or more lubricants selected from solid paraffin, liquid paraffin, montanic esters, partially saponified montanic esters, stearic acids, polar polyethylene waxes, non-polar polyethylene waxes, poly-α-olefin oligomers, silicone oils, polyalkylene glycols, perfluoroalkyl ethers.

4. The molding composition as claimed in one or more of claims 1 to 3, wherein the lubricant with predominantly external lubricant action from the mixture of component (C) is a high-molecular-weight, polar polyethylene wax and has an acid value of from 12 to 20 mg KOH/g and a viscosity of from 3000 to 5000 mPa*s at a temperature of 140°C.

5. The molding composition as claimed in one or more of claims 1 to 4, wherein the lubricant with predominantly internal lubricant action from the mixture of component (C) is one or more lubricants selected from fatty alcohols, dicarboxylic esters, fatty esters, fatty acids, fatty acid soaps, fatty amides, wax esters, and stearyl stearates.

6. The molding composition as claimed in one or more of claims 1 to 5, wherein the lubricant with predominantly internal lubricant action from the mixture of component (C) is a stearyl stearate.

7. The molding composition as claimed in one or more of claims 1 to 6, wherein the impact-modifier component (D) is a thermoplastic polyurethane elastomer.

8. The molding composition as claimed in one or more of claims 1 to 6, wherein the impact-modifier component (D) is a polyesterurethane.

9. The molding composition as claimed in one or more of claims 1 to 8, wherein component (E) is one or more materials selected from the fillers chalk, talc, wollastonite, mica, zinc oxide, silicon dioxide, the reinforcing materials glass fibers, carbon fibers, and/or organic high-modulus fibers, and/or the polymeric lubricants polytetrafluoroethylene in pulverulent and/or fiber form, UHMW polyethylene, graft polymers obtained from a graft reaction of polyethylene with acrylonitrile-styrene copolymer (SAN).

10. The use of a thermoplastic molding composition as claimed in one or more of claims 1 to 9 for producing moldings or films.

11. The use of a thermoplastic molding composition as claimed in one or more of claims 1 to 9 in the form of functional components with requirements for good electrical conductivity and good wear performance.

12. A molding produced from a thermoplastic molding composition as claimed in one or more of claims 1 to 9.

## Revendications

1. Matière à mouler thermoplastique constituée de
composant (A) : 14 à 97,5 parties en poids d'un homo- ou copolymère polyoxyméthylène,
composant (B) : 1 à 10 parties en poids d'un noir de carbone conducteur
composant (C) : 0,5 à 6 parties en poids d'un mélange de lubrifiants constitué d'un lubrifiant à effet lubrifiant essentiellement interne et d'un lubrifiant à effet lubrifiant essentiellement externe,
composant (D) : 1 à 25 parties en poids d'un composant antichoc, et
composant (E) : 0 à 50 parties en poids d'autres additifs et adjuvants de mise en oeuvre, charges, renforts et lubrifiants polymères, la somme des composants (A) à (E) étant toujours de 100 parties en poids.

2. Matière à mouler selon la revendication 1, **caractérisée en ce qu'**elle est constituée de 60 à 89 parties en poids du composant (A), 3 à 5 parties en poids du composant (B), 3 à 5 parties en poids du composant (C), et 5 à 10 parties en poids du composant (D).

3. Matière à mouler selon une ou plusieurs des revendications 1 et 2, **caractérisée en ce que** le lubrifiant à effet lubrifiant essentiellement externe du composant (C) est choisi parmi un ou plusieurs des lubrifiants paraffine solide, paraffine liquide, esters d'acide montanique, esters d'acide montanique partiellement saponifiés, acides stéariques, cires polyéthylène polaires, cires polyéthylène non polaires, oligomères poly-α-oléfines, huiles de silicone, polyalkylèneglycols, perfluoroalkyléthers.

4. Matière à mouler selon une ou plusieurs des revendications 1 à 3, **caractérisée en ce que** le lubrifiant à effet lubrifiant essentiellement externe du mélange du composant (C) est une cire polyéthylène polaire de masse moléculaire élevée et présente un indice d'acide de 12 à 20 mg de KOH/g et une viscosité de 3 000 à 5 000 mPa.s à une température de 140°C.

5. Matière à mouler selon une ou plusieurs des revendications 1 à 4, **caractérisée en ce que** le lubrifiant à effet lubrifiant essentiellement interne du mélange du composant (C) est choisi parmi un ou plusieurs des lubrifiants alcools gras, esters d'acides dicarboxyliques, esters d'acides gras, acide gras, savons d'acides gras, amide gras, esters cireux et stéarates de glycéryle.

6. Matière à mouler selon une ou plusieurs des revendications 1 à 5, **caractérisée en ce que** le lubrifiant à effet lubrifiant essentiellement interne du mélange du composant (C) est un stéarate de stéaryle.

7. Matière à mouler selon une ou plusieurs des revendications 1 à 6, **caractérisée en ce que** le composant antichoc (D) est un élastomère polyuréthanne thermoplastique.

8. Matière à mouler selon une ou plusieurs des revendications 1 à 6, **caractérisée en ce que** le composant antichoc (D) est un polyester-uréthanne.

9. Matière à mouler selon une ou plusieurs des revendications 1 à 8, **caractérisée en ce que** le composant (E) est choisi parmi une ou plusieurs des charges craie, talc, wollastonite, mica, oxyde de zinc, dioxyde de silicium, les renforts fibres de verre, fibres de carbone et/ou fibres organiques à haut module d'élasticité et/ou les lubrifiants polymères polytétrafluoroéthylène sous forme de poudre et/ou de fibres, polyéthylène UHMW (ultra-haute masse moléculaire), polymères greffés obtenus par la réaction de greffage de polyéthylène et d'un copolymère acrylonitrile/styrène (SAN).

10. Utilisation d'une matière à mouler thermoplastique selon une ou plusieurs des revendications 1 à 9, pour la fabrication de corps moulés et de films.

11. Utilisation d'une matière à mouler thermoplastique selon une ou plusieurs des revendications 1 à 9, sous forme de pièces fonctionnelles ayant des exigences en une bonne conductivité électrique et un bon comportement à l'usure.

12. Corps moulés fabriqués à partir d'une matière à mouler thermoplastique selon une ou plusieurs des revendications 1 à 9.
